# EUROPEAN PATENT APPLICATION

(11) **EP 1 130 851 A2**
(43) Date of publication of application: **05.09.2001**
(21) Application number: 01301531.8
(22) Date of filing: 21.02.2001
(51) Int. Cl.: H04L 12/28, H04L 12/407

(54) **A method for controlling a communication of stream data**

(30) Priority: 21.02.2000 JP 2000048969
(71) Applicant: SONY CORPORATION, Tokyo 141 (JP)
(72) Inventor: Noda, Takuro, Shinagawa-ku, Tokyo 141 (JP); Aoki, Yukihiko, Shinagawa-ku, Tokyo 141 (JP)
(74) Representative: Pratt, Richard Wilson

(57) **Abstract**

A communication control method and a communication control apparatus are provided for preventing truncation at the beginning upon receipt of data, for example, between devices interconnected through a bus line in conformity to the IEEE 1394 standard. In a communication system 100 which comprises an output device 3 for outputting stream data through a data bus 5, which includes predetermined connecting means, an input device 4 for acquiring the stream data from the output device 3 through the data bus 5, and a communication controller 1 for controlling the output device 3 and the input device 4, all of which are interconnected through the data bus 5, the communication controller 1 requests the output device 3 and the input device 4 to start communicating stream data, forces the input device 4, which has been requested to start the communication, to notify the output device 3 that the input device 4 has completed a preparation for receiving the stream data, and forces the output device 3 to transmit the stream data to the input device 4 through the data bus 5 when the completion of preparation for the reception is notified to the output device 3, thereby making it possible to prevent truncation at the beginning upon receiving the stream data at the input device.

## Description

### BACKGROUND OF THE INVENTION

### Field of the Invention

The present invention relates to a communication control method and a communication control apparatus.

Embodiments of the invention relate to a communication control method and a communication control apparatus which are suitable for use in communicating data between devices interconnected through a bus line, for example, in conformity to the IEEE 1394 standard.

### DESCRIPTION OF THE RELATED ART

In recent years, a network system has been proposed for mutually transmitting stream data among a plurality of devices interconnected through a serial data bus in conformity to the Institute of Electrical and Electronics Engineers (IEEE) 1394 standard.

In this network system, a relatively large capacity of data is transmitted in real time through the serial data bus in conformity to the IEEE 1394 standard, such that stream data can be communicated between devices interconnected through the serial data bus in conformity to the IEEE1394 standard.

In communications of stream data in such a network system, the reception side requires a longer time for a reception preparation step and so on than the transmission side, so that even if the transmission side and the reception side are operated by the same commands, transmission started at the transmission side does not coincide in time with reception started at the reception side.

This causes the reception side to fail to receive a beginning portion (a head portion) of stream data supplied from the transmission side, so that, assuming that a device on the reception side is a recording apparatus such as a DVD player or the like, the device receives and records the stream data supplied from the transmission side from a midway point, thereby experiencing difficulties in recording the beginning portion. Also, if a device on the reception side is a reproducing apparatus such as an amplifier or the like, the device receives stream data supplied from the transmission side from a midway point, and outputs the received data as audio, thereby giving rise to a problem that the device cannot output a beginning portion of the stream data.

### SUMMARY OF THE INVENTION

An embodiment of this invention seeks to provide a communication control method and a communication control apparatus which are capable of preventing truncation at the beginning upon receiving stream data.

Aspects of the present invention provide a communication control method and a communication control apparatus in a communication system which comprises an output device for outputting stream data through a data bus, predetermined connecting means, an input device for acquiring the stream data from the output device through the data bus, and a communication controller for controlling the output device and the input device, all of which are interconnected through the data bus. The communication controller requests the output device and the input device to start communicating stream data, forces the input device, which has been requested to start the communication, to notify the output device that the input device has completed a preparation for receiving the stream data, and forces the output device to transmit the stream data to the input device through the data bus when the completion of preparation for the reception is notified to the output device, thereby making it possible to prevent truncation at the beginning upon receiving the stream data at the input device.

A better understanding of the invention will become more apparent from the following illustrative description when read in conjunction with the accompanying drawings in which like parts are designated by like reference numerals or characters.

### BRIEF DESCRIPTION OF THE DRAWINGS

In the accompanying drawings:
Fig. 1 is a block diagram illustrating a connection through an IEEE 1394 serial data bus;
Fig. 2 is a block diagram generally illustrating the configuration of a network system according to an embodiment of the present invention;
Fig. 3 is a schematic diagram illustrating the structure of an address space of CRS;
Fig. 4 is a table showing main locations, names and actions of CRS;
Fig. 5 is a schematic diagram showing an exemplary data structure transmitted by an AV/C command;
Fig. 6 is a block diagram illustrating the configuration of an audio reproducing apparatus;
Fig. 7 is a block diagram illustrating the configuration of an audio recording/reproducing apparatus;
Fig. 8 is a block diagram illustrating the configuration of a controller;
Fig. 9 is a schematic diagram illustrating how devices are connected to each other;
Fig. 10 is a schematic diagram showing the configuration of PCR;
Figs. 11 are schematic diagrams showing the configuration of oPCR and iPCR;
Fig. 12 is a table showing AV/C commands for use in setting up a node;
Fig. 13 is a table showing a standard and a command for connecting a plug;
Fig. 14 is a flow chart illustrating a stream data transmission processing procedure according to an embodiment of the present invention;
Fig. 15 is a table showing AV/C commands for use in data pull setting and data push setting; and
Fig. 16 is a flow chart illustrating a stream data transmission processing procedure according to another embodiment.

### DETAILED DESCRIPTION OF THE EMBODIMENT

Illustrative embodiments of this invention will be described with reference to the accompanying drawings:

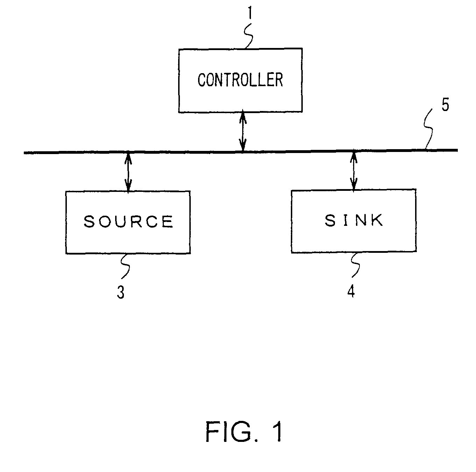

Fig. 1 illustrates a system configuration which has a controller 1, a source device 3, and a sink device 4 which are interconnected through a serial data bus 5 in conformity to the Institute of Electrical and Electronics Engineers (IEEE) 1394 standard (hereinafter referred to as the "IEEE1394 bus").

For transmitting data through the IEEE1394 bus 5, the system is provided with an isochronous transmission mode for use in transmitting a relatively large capacity of data such as audio data in real time, and an asynchronous transmission mode for use in securely transmitting still images, control commands and so on. The respective modes use dedicated bands.

The controller 1, the source device 3 and the sink device 4 interconnected through the IEEE 1394 bus may be referred to as "nodes" in some cases. Further, the controller 1 comprises a variety of functions, for example, an isochronous transmission function for implementing the isochronous transmission mode, and so on, for allowing the node interconnected through the IEEE 1394 bus 5 to practically function for one another (for example, copying an audio signal from the source device 3 to the sink device 4).

When the controller 1 controls the respective nodes (the source device 3 and the sink device 4), the source device 3 acts as a node for sending stream data, while the sink device 4 acts as a node for acquiring the stream data.

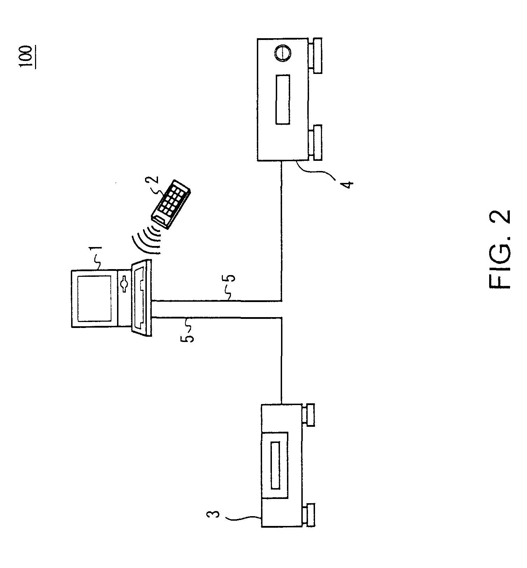

Referring now to Fig. 2, a home network system generally designated by reference numeral 100 comprises a personal computer (controller) 1, an audio reproducing apparatus (source device) 3, and an audio recording/reproducing apparatus (sink device) 4 interconnected through an IEEE 1394 bus 5.

The IEEE 1394 standard complies with a Control & Status Register (CSR) architecture which has a 64-bit address space defined by International Organization for Standardization (ISO)/ International Electrotechnical Commission (IEC) 13213.

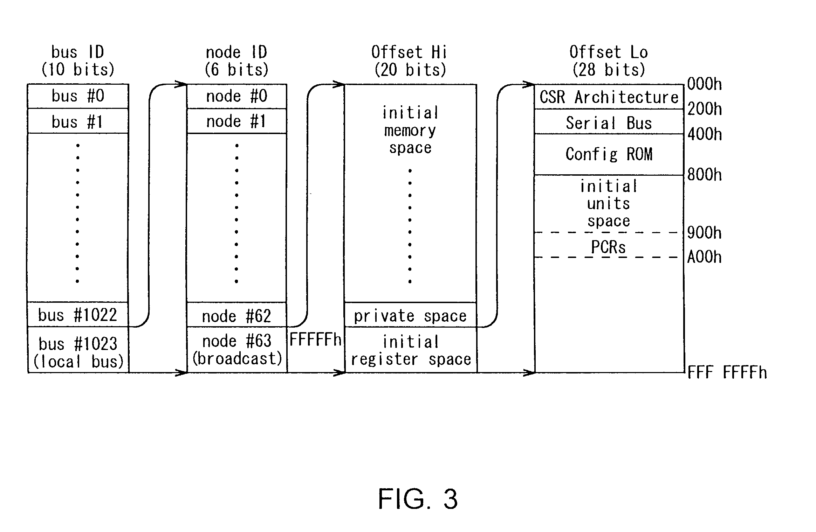

The structure of this address space in CSR is shown in Fig. 3. In Fig. 3, upper 16 bits comprise an ID indicative of a device (node) connected through the IEEE 1394 bus, and the remaining 48 bits are used for specifying an address space provided to each node. The upper 16 bits are further divided into 10 bits for storing a bus ID and 6 bits for storing a physical ID (a node ID in a narrow sense). Since the value comprised of all bits set at "1" is used for a special purpose, the CSR address space can specify 1,023 buses and 63 nodes.

In a 256-terabyte address space defined by the lower 48 bits, a space defined by the upper 20 bits is divided into an initial register space for use as a 2048-byte register specific to the CSR, a register specific to IEEE 1394, and so on; a private space; an initial memory space; and so on. A space defined by the lower 28 bits is used as a configuration ROM, an initial unit space for use in applications specific to a node, a plug control register (PCRs), and so on, when the space defined by the upper 20 bits serves as the initial register space.

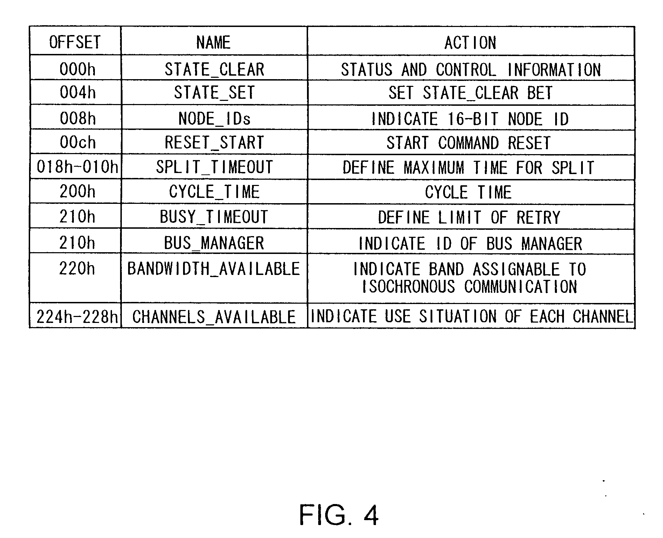

Fig. 4 shows main CSR offset addresses together with their names and actions. The offset used in Fig. 4 indicates an offset address from the address FFFFF0000000h (a numerical value with "h" added to the end thereof indicates that this is represented in hexadecimal notation) at which the initial register space begins. A bandwidth available register having an offset 220h indicates a band which can be allocated to isochronous communications, and preserves a maximum value, when the band is not allocated to the isochronous communications, which value is decremented each time the band is allocated.

A channel available register with an offset in a range of 224h to 228h has its respective bits corresponded to channel numbers 0 to 63, where a bit set at "0" indicates that a channel associated thereto has already been allocated.

Referring back to Fig. 2, the personal computer (controller) 1 sends an AV/C command, in response to a manipulation on a remote controller 2, to a device (the audio reproducing apparatus (source device) 3 or the audio recording/reproducing apparatus (sink device) 4) associated with the contents of the manipulation on the remote controller 2 at that time to control the device to which the AV/C command is sent.

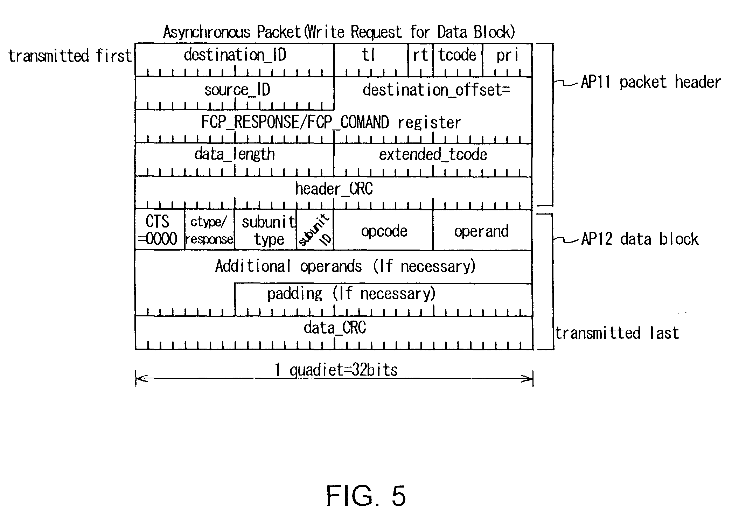

The AV/C command is defined as a command for controlling a device connected to the IEEE 1394 serial bus, and has a data structure as shown in Fig. 5.

Specifically, Fig. 5 shows the data structure for a packet which is transmitted in the asynchronous transmission mode that is used for transmitting a large capacity of data in real time. The AV/C command has CTS (ID of a command set) set at "0000" (CTS="0000") in a command set for controlling a node connected through the IEEE 1394 serial bus. Then, an AV/C command frame and a response frame are communicated among nodes interconnected through the IEEE 1394 serial bus.

Data in an asynchronous packet is comprised of 32 bits (= 1 quadlet) in the horizontal direction. In Fig. 5, upper rows indicate a header AP11 of the packet, wherein destination_ID indicates a destination.

Lower rows indicate a data block AP12, wherein CTS indicates ID of a command set. Also, in the data block AP12, a field ctype/response indicates a functional classification of a command when a communicated packet is a command, and indicates the result of processing a command when a communicated packet is a response.

The functional classifications for a command described in the ctype/response field is generally divided into four types which are defined as follows: a command (CONTROL) for controlling a function from the outside (a node connected to the IEEE 1394 serial data bus); a command (STATUS) for inquiring the status from the outside; commands for inquiring the presence or absence of a support for a control command from the outside (GENERAL INQUIRY (for inquiring presence or absence of a support for an opcode) and SPECIFIC INQUIRY (for inquiring presence or absence of a support for an opecode and operands); and a command (NOTIFY) for requesting notification of a change in status to the outside.

A response described in the ctype/response field is sent back in accordance with each command. A response to the CONTROL command includes NOT IMPLEMENTED, ACCEPTED, REJECTED, and INTERIM (interim response).

A response to the STATUS command includes NOT IMPLEMENTED, REJECTED, IN TRANSITION, and STABLE.

Responses to the GENERAL INQUIRY and SPECIFIC INQUIRY commands include IMPLEMENTED and NOT IMPLEMENTED.

A response to the NOTIFY command includes NOT IMPLEMENTED, REJECTED, INTERIM, and CHANGED.

It should be noted that other commands and responses than the foregoing may be defined in some cases.

Within the data block AP12, a subunit type field is provided for identifying a function in a node connected through the IEEE 1394 serial bus, and assigned "type disk recorder/player," "type tuner" and so on.

Within the data block AP12, a subunit ID is assigned a discrimination number for discriminating nodes of the same subunit type when a node is comprised of a plurality of the same subunit types.

Within the data block AP12, an *opcode* field represents a command, an operand field represents a parameter of a command, and Additional operands and padding fields are added as required.

Within the data block AP12, a data Cyclic Redundancy Check (CRC) field is assigned a CRC value for detecting an error which possibly occurs during data transmission.

In this way, the personal computer (controller) 1 utilizes the. AV/C commands as described above to control the nodes (the audio reproducing apparatus (source device) 3 and the audio recording/reproducing apparatus (sink device) 4) interconnected through the IEEE 1394 bus 5.

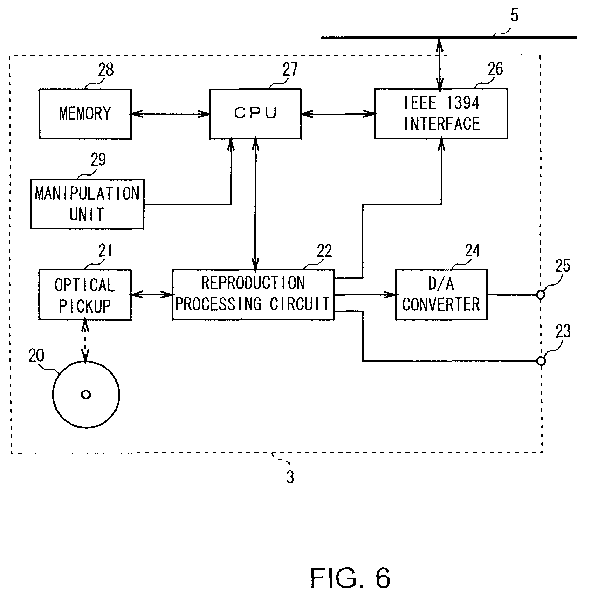

Fig. 6 illustrates the internal configuration of the audio reproducing apparatus (source device) 3. A CPU 27 is configured to execute a variety of processing in accordance with a processing program stored in a memory 16 in response to a variety of commands entered through a manipulation unit 29 or an AV/C command supplied through the IEEE 1394 bus, and control respective circuit units in accordance with the processing. In this way, the CPU 27 reproduces audio data recorded on a recording medium (optical disk 20) referred to as the "compact disk" (CD).

Specifically, the audio reproducing apparatus (source device) 3 optically reads an audio signal recorded on the optical disk 20 loaded in the audio reproducing apparatus (source device) 3 with an optical pickup 21 and sends the read audio signal to a reproduction processing circuit 22.

The reproduction processing circuit 22 performs reproduction processing such as predetermined digital conversion, error correction and so on on the audio signal to generate audio data which is sent to a digital-to-analog (D/A) converter 24 and an IEEE 1394 interface 26, respectively, and is also outputted to the outside through a digital output terminal 23.

The D/A converter 24 performs predetermined analog conversion on audio data supplied from the reproduction processing circuit 22 to generate an analog audio signal which is outputted to the outside through an analog output terminal 25.

The IEEE 1394 interface 26 in turn is an input/output interface in conformity to the IEEE 1394 standard, and can output audio data supplied from the reproduction processing circuit 22 through the IEEE 1394 bus 5 connected by the interface 26 as stream data.

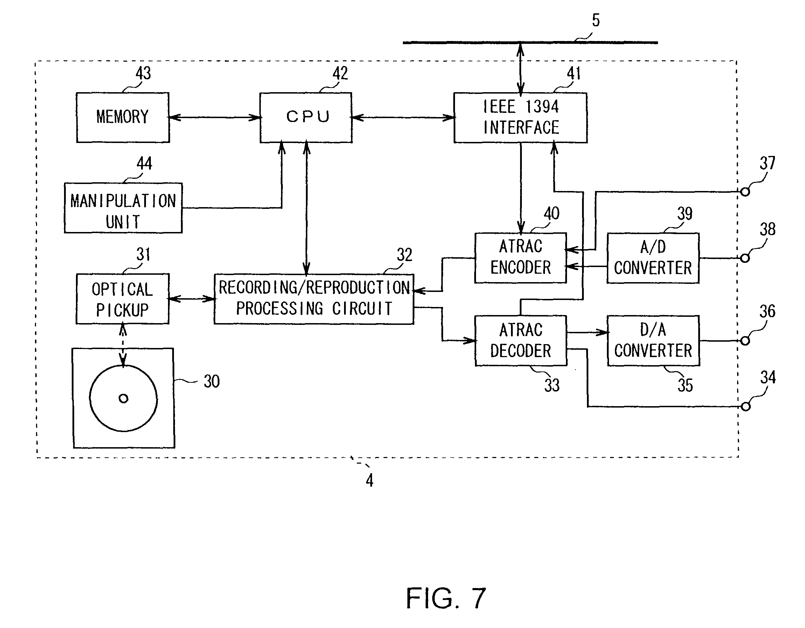

Fig. 7 illustrates the internal configuration of the audio recording/reproducing apparatus (sink device) 4, wherein a CPU 47 is configured to execute a variety of processing in accordance with a processing program stored in a memory 43 in response to a variety of commands entered through a manipulation unit 44 or an AV/C command supplied through an IEEE 1394 interface 41. In this way, the CPU 42 is configured to record audio data supplied from the outside on a recording medium (magneto-optical disk 31) referred to as the "mini disk" (MD) or to reproduce audio data recorded on the recording medium (magneto-optical disk 31).

Specifically, in the reproduction processing, the audio recording/reproducing apparatus (sink device) 4 optically reads an audio signal recorded on the magneto-optical disk 21 loaded in the audio recording/reproducing apparatus (sink device) 4 with an optical pickup 31, and sends the read audio signal to a recording/reproducing processing circuit 32.

The recording/reproducing processing circuit 32 performs reproducing processing such as predetermined digital conversion, error correction and so on on the audio signal to generate compressed audio data which is sent to an Adaptive TRansform Acoustic Coding (ATRAC) decoder 33.

The ATRAC decoder 33 decodes the compressed audio data in conformity to an ATRAC scheme to restore original audio data which is sent to a digital-to-analog (D/A) converter 35 and an IEEE 1394 interface 41, respectively, and is also outputted to the outside through a digital output terminal 34.

The D/A converter 35 performs predetermined analog conversion on audio data to generate an analog audio signal which is outputted to the outside through an analog output terminal 36.

The IEEE 1394 interface 41 in turn can output audio data supplied from the recording/reproducing processing circuit 32 as stream data.

In recording processing, the audio recording/reproducing apparatus (sink device) 4 receives, at an ATRAC encoder 40, audio data inputted thereto through the digital input terminal 37 from the outside, or receives at an analog-to-digital (A/D) converter 39 an analog audio signal inputted thereto through an analog input terminal 38 from the outside.

The A/D converter 39 performs predetermined digital conversion on the analog audio signal to generate audio data which is sent to the ATRAC encoder 40.

The ATRAC encoder 40 compresses audio data supplied from the outside or from the A/D converter 39 in conformity to the ATRAC scheme to generate compressed audio data which is sent to the recording/reproducing processing circuit 32. The recording/reproducing processing circuit 32 records the compressed audio data on the magneto-optical disk 31 as an audio data with the optical pickup 31.

The IEEE 1394 interface 41 in turn is an input/output interface in conformity to the IEEE 1394 standard, and can input stream data supplied from the outside (a device connected thereto through the IEEE 1394 bus 5) through the IEEE 1394 bus 5 connected to the interface 26.

In this event, the audio recording/reproducing apparatus (sink device) 4 records audio data inputted thereto through the IEEE 1394 bus 5 (audio data encoded in accordance with the ATRAC scheme or audio data not encoded in accordance with the ATRAC scheme) on the magneto-optical disk 31 as an audio signal with the optical pickup 31 through the ATRAC encoder 40 and the recording/reproducing processing circuit 32.

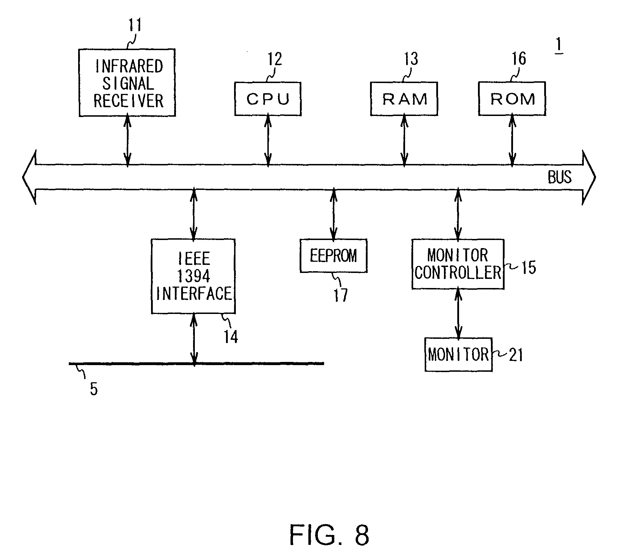

Fig. 8 illustrates the internal configuration of the personal computer (controller) 1. The personal computer (controller) 1 comprises a CPU 12, a ROM 16, a RAM 13, and respective circuit units interconnected through a bus BUS. A processing program stored in the ROM 16 is loaded into the RAM 13 so that the CPU 12 executes a variety of processing in accordance with the program and controls the respective circuit units in accordance with the processing. The contents of a variety of processing are displayed on a monitor 18 which may comprise a liquid crystal display or the like through a monitor controller 15.

It should be noted that an IEEE 1394 interface 14 is an input/output interface in conformity to the IEEE 1394 standard, and is connected to the IEEE 1394 bus 5. An Electrically Erasable Programmable Read-Only Memory (EEPROM) 17 previously stores information such as the names of manufacturers and the names of units corresponding to CampanyID, ChipID and so on of the audio reproducing apparatus 3 and the audio recording/reproducing apparatus 4 connected through the IEEE 1394 bus 5; information which must be held even after the power is turned off; and so on. Such information is updated when a new device is connected through the IEEE 1394 bus 5, or when a device previously connected through the IEEE 1394 bus 5 is removed. The personal computer (controller) 1 is also configured to generate an AV/C command based on this information and so on.

Here, as the user performs a predetermined manipulation through the remote controller 2, for example, for recording (copying) an audio signal retrieved from the optical disk 20 (Fig. 4) loaded in the audio reproducing apparatus 3 on the magneto-optical disk 30 (Fig. 5) loaded in the audio recording/reproducing apparatus 4, the remote controller 2 opto-electrically transduces a copy command generated based on the input manipulation by the user into an infrared signal which is outputted to the personal computer (controller) 1.

An infrared signal receiver 11 of the personal computer (controller) 1 receives the infrared signal supplied from the remote controller 2, and opto-electrically transduces the infrared signal into the original copy command which is sent to the CPU 12.

In this way, the CPU 12 determines how to control the respective nodes (the audio reproducing apparatus 3 and the audio recording/reproducing apparatus 4 connected through the IEEE 1394 bus 5) from information on functions of the respective nodes previously stored in the RAM 13, generates AV/C commands based on the determined control sequence, and sends the generated AV/C commands to the audio reproducing apparatus 3, which acts as the source device, and to the audio recording/reproducing apparatus 4, which acts as the sink device, through the IEEE 1394 interface 14 to control the audio reproducing apparatus 3 and the audio recording/reproducing apparatus 4.

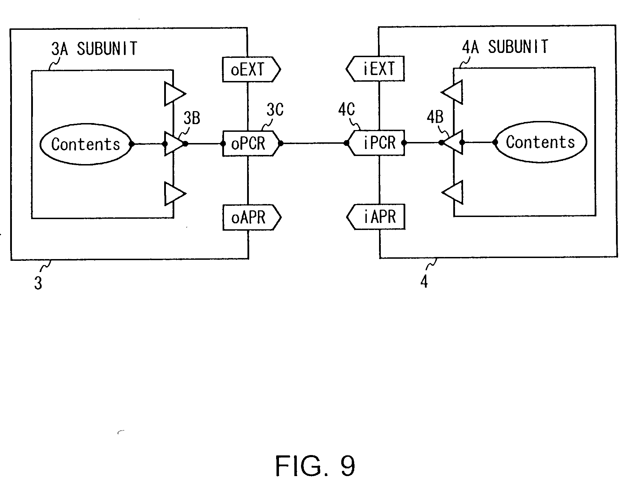

In this way, the CPU 12 sets a connection of the audio reproducing apparatus (source device) 3 to the audio recording/reproducing apparatus (sink device) 4, as illustrated in Fig. 9. In this event, the CPU 12 first sets up the audio reproducing apparatus (source device) 3 and the audio recording/reproducing apparatus (sink device) 4, and then connects the audio reproducing apparatus (source device) 3 to the audio recording/reproducing apparatus (sink device) 4.

For setting up the audio reproducing apparatus (source device) 3, a plug 3B of a sub-unit (type player) 3A within the audio reproducing apparatus (source device) 3 is configured so as to enable the audio reproducing apparatus (source device) 3 to communicate information. Then, the plug 3B of the sub-unit 3A is connected to a plug (oPCR) 3C of the audio reproducing apparatus (source device) 3. Subsequently, the plug (oPCR) 3C of the audio reproducing apparatus (source device) 3 is configured.

Here, the Plug Control Register (PCR) is an implementation of a concept, referred to as a "plug," for forming signal paths, which are logically similar to an analog interface, in addresses 900h to 9FFh in the aforementioned initial unit in Fig. 3. The PCR is defined in IEC 1883.

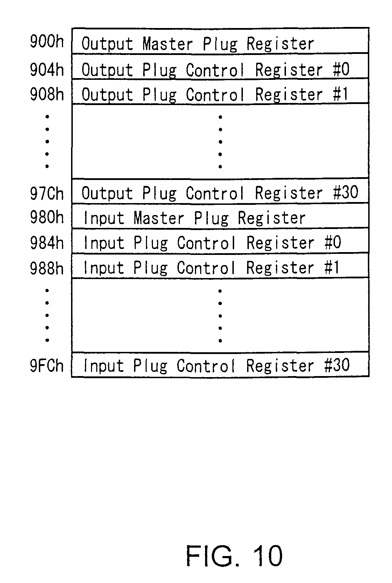

This PCR has an output Plug Control Register (oPCR) representative of an output plug, and an input Plug Control Register (iPCR) representative of an input plug, as illustrated in Fig. 10. The PCR also has registers labeled output Master Plug Register (oMPR) and an input Master Plug Register (iMPR) representative of information on an output plug and an input plug, respectively, inherent to each of nodes connected to the serial data bus in conformity to the 1394 standards. The PCR illustrated in Fig. 10 has 31 oPCRs and iPCRs, respectively, and the flow of isochronous data is controlled by manipulating the registers corresponding to these plugs.

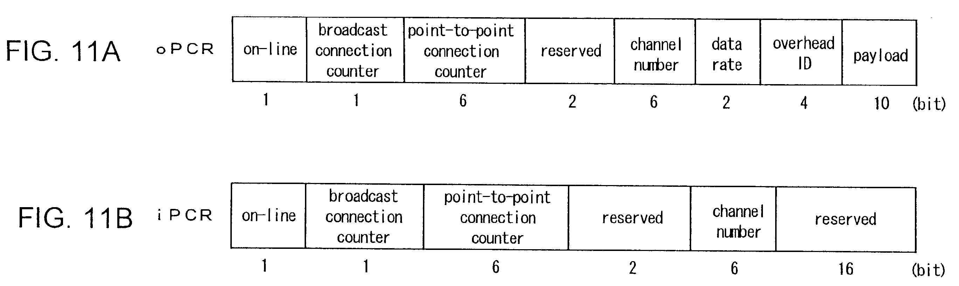

Figs. 11A, 11B illustrate the configuration of the oPCR and iPCR, respectively, wherein an on-line field in the oPCR and iPCR indicates a use status of an associated plug. Specifically, the on-line field set at "1" indicates that the associated plug is on line, while the on-line field set at "0" indicates that the plug is off line. A point-to-point connection counter field of 6 bits wide in the oPCR and iPCR has a value which indicates the number of point-to-point connections possessed by the associated plug. A channel number field of 6 bits wide in the oPCR and iPCR has a value indicative of an isochronous channel number connected to a plug of each node which is connected to a serial data bus in conformity to the 1394 standard.

In the setting for a connection of the audio reproducing apparatus (source device) 3 to the audio recording/reproducing apparatus (sink device) 4, the audio recording/reproducing apparatus (sink device) 4 is set up similar to the audio reproducing apparatus (source device) 3. Specifically, a plug 4B of a sub-unit (type player) 4A is configured, and the plug 4B of the sub-unit 4A is connected to a plug (iPCR) 4C of the audio recording/reproducing apparatus (sink device) 4, followed by the configuration of the plug (iPCR) 4C of the audio recording/reproducing apparatus (sink device) 4.

It should be noted that either of the audio reproducing apparatus (source device) 3 and the audio recording/reproducing apparatus (sink device) 4 can be set up first.

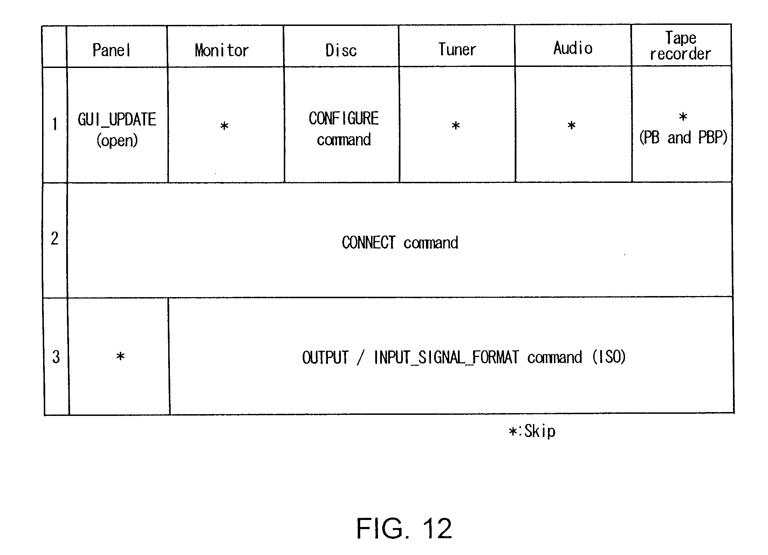

Referring now to Fig. 12 showing AV/C commands for use in setting up the nodes (audio reproducing apparatus (source device) 3, audio recording/reproducing apparatus (sink device) 4), the row "1" indicates a command for configuring the plug 3B of the sub-unit 3A or the plug 4B of the sub-unit 4A. In this event, since the sub-units 3A, 4A are both disk recording/reproducing units (type player), a CONFIGURE command is used.

The row "2" indicates a command for connecting the plug 3B of the sub-unit 3A to the plug 3C of the audio reproducing apparatus (source device) 3 or for connecting the plug 4B of the sub-unit 4A to the plug 4C of the audio recording/reproducing apparatus (sink device) 4. In this event, a CONNECT command is used.

In the connection of the plug 3B of the sub-unit 3A to the plug 3C of the audio reproducing apparatus (source device) 3, the configured plug 3B of the sub-unit 3A is connected to a plug 3C corresponding to the audio reproducing apparatus (source device) 3 For example, when the configured plug 3B handles stream data which is real time data, the plug 3B is connected to a plug oPCR (see Fig. 9) for performing the isochronous transmission. On the other hand, when the configured plug 3B handles stream data which is not real time data (still image or the like), the plug 3B is connected to a plug oAPR (see Fig. 9) for performing the asynchronous transmission. The oPCR and oAPR are virtual plugs, respectively, which are connected to the IEEE 1394 bus 5. Also, oEXT indicates a physical external output terminal. It should be noted that a connection of the plug 4B of the sub-unit 4A to the plug 4C of the audio recording/reproducing apparatus (sink device) 4 is made in a manner similar to the connection of the plug 3B of the sub-unit 3A to the plug 3C of the audio reproducing apparatus (source device) 3.

The row "3" indicates a command for a data format handled in the plug 3C (oPCR) of the audio reproducing apparatus (source device) 3 connected to the plug 3B of the sub-unit 3A. It should be noted that a command for a data format handled in the plug 4C (iPCR) of the audio recording/reproducing apparatus (sink device) 4 connected to the plug 4B of the sub-unit 4A is similar to the command for the data format handled in the plug 3C of the audio reproducing apparatus (source device) 3 connected to the plug 3B of the sub-unit 3A.

In Fig. 12, "*" means that associated processing is skipped. For example, the row "1" of the tuner is filled with "*," meaning that the configuration of the plug of the sub-unit is skipped because data handled in the plug is uniquely determined when the sub-unit is the tuner.

In the setting for the connection of the audio reproducing apparatus (source device) 3 to the audio recording/reproducing apparatus (sink device) 4, the connection of the audio reproducing apparatus (source device) 3 to the audio recording/reproducing apparatus (sink device) 4 involves connecting the plug 3C (oPCR) connected to the configured plug 3B of the sub-unit 3A in the audio reproducing apparatus (source device) 3 to the plug 4C (iPCR) connected to the configured plug 4B of the sub-unit 4A in the audio recording/reproducing apparatus (sink device) 4. In this event, two plugs which handle the same type of data are connected to each other.

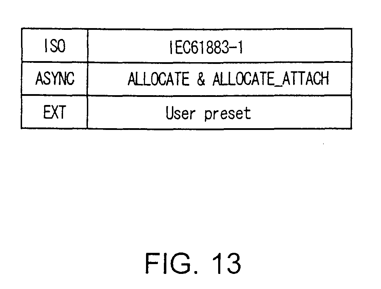

Fig. 13 shows a standard, a command, and so on for connecting the plug 3C (oPCR) of the audio reproducing apparatus (source device) 3 to the plug 4C (iPCR) of the audio recording/reproducing apparatus (sink device) 4. The connection of the plug oPCR to the plug iPCR is made in accordance with the International Electrotechnical Commission (IEC) 61883-1 standard.

In this event, the personal computer (controller) 1 requests the audio reproducing apparatus (source device) 3 and the audio recording/reproducing apparatus (sink device) 4 to acquire a channel for isochronous communications. In response to this request, the audio reproducing apparatus (source device) 3 and the audio recording/reproducing apparatus (sink device) 4 set "0" in a bit corresponding to an empty channel in the channel bandwidth available register of the CSR (see Fig. 3) which has a 64-bid address space defined by ISO/IEC 13213 to acquire a channel.

The personal computer (controller) 1 requests the audio reproducing apparatus (source device) 3 and the audio recording/reproducing apparatus (sink device) 4, which have acquired a channel for isochronous communications, to ensure a required band for the isochronous communications. In response to this request, the audio reproducing apparatus (source device) 3 and the audio recording/reproducing apparatus (sink device) 4 subtracts a numerical value from the value possessed by the bandwidth available register of the CSR in accordance with the requested band to acquire a required band.

Then, the personal computer (controller) 1 selects an unused iPCR from iPCRs of the audio recording/reproducing apparatus (sink device) 4, which has acquired the required band, sets the number of an isochronous channel to be used in the channel number field of the selected iPRC, and sets the point-to-point connection counter of the selected iPRC to "1" (see Fig. 11B).

Further, the personal computer (controller) 1 selects an unused oPCR of oPCRs of the audio reproducing apparatus (source device) 3, which has acquired the required band, sets the number of the isochronous channel identical to that set in the iPCR in the channel number field of the selected oPCR, and sets the point-to-point connection counter of the oPCR to "1" (see Fig. 11A).

In this way, the band for the channel as well as the output plug and the input plug are reserved between the audio reproducing apparatus (source device) 3 and the audio recording/reproducing apparatus (sink device) 4 to set a connection in the isochronous transmission.

Then, the personal computer (controller) 1 keeps track of operation processes of the interconnected audio reproducing apparatus (source device) 3 and audio recording/reproducing apparatus (sink device) 4 to enable the audio recording/reproducing apparatus (sink device) 4 to acquire an audio signal generated from the audio reproducing apparatus (source device) 3 as stream data through the IEEE 1394 bus 5 when the audio recording/reproducing apparatus (sink device) 4 is ready for reception.

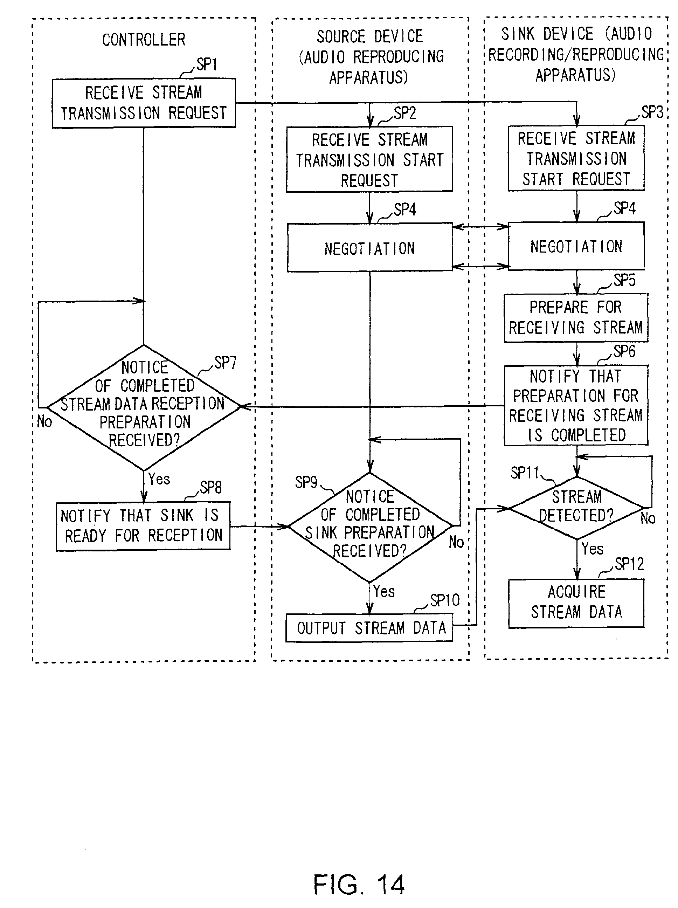

More specifically, as illustrated in Fig. 14, the personal computer (controller) 1 initiates a routine RT1 of a stream data transmission processing procedure, receives a transmission request (dubbing command) at subsequent step SP1, generates an AV/C command in accordance with the transmission request, and sends the AV/C command to the audio reproducing apparatus (source device) 3 and the audio recording/reproducing apparatus (sink device) 4, followed by a transition to step SP2 and step SP3.

At step SP2, the audio reproducing apparatus (source device) 3 receives a start request (AV/C command) supplied from the personal computer (controller) 1, followed by a transition to subsequent step SP4.

At this time, the audio recording/reproducing apparatus (sink device) 4 receives the start request (AV/C command) supplied from the personal computer (controller) 1 at step SP3, similarly to step SP2, followed by a transition to subsequent step SP4.

At step SP4, the audio reproducing apparatus (source device) 3 and the audio recording/reproducing apparatus (sink device) 4 mutually make a connection setting (see Fig. 9), referred to as "negotiation," for the reception side (audio recording/reproducing apparatus (sink device) 4) and the transmission side (audio reproducing apparatus (source device) 3) in the isochronous transmission. Subsequently, the audio reproducing apparatus (source device) 3 proceeds to step SP9, while the audio recording/reproducing apparatus (sink device) 4 proceeds to step SP5.

It should be noted that in the negotiation process, when the connection setting is made in the isochronous transmission between the reception side (audio recording/reproducing apparatus (sink device) 4) and the transmission side (audio reproducing apparatus (source device) 3), if stream data supplied from the transmission side (audio reproducing apparatus (source device) 3) has been encrypted, the encrypted stream data is restored to original data between the reception side (audio recording/reproducing apparatus (sink device) 4) and the transmission side (audio reproducing apparatus (source device) 3).

At step SP5, the audio recording/reproducing apparatus (sink device) 4 moves the optical pickup (see Fig. 5) to a recordable empty region on the magneto-optical disk 30 loaded therein (data pull setting (Pull the Stream)) to get ready for reception, followed by a transition to step SP6.

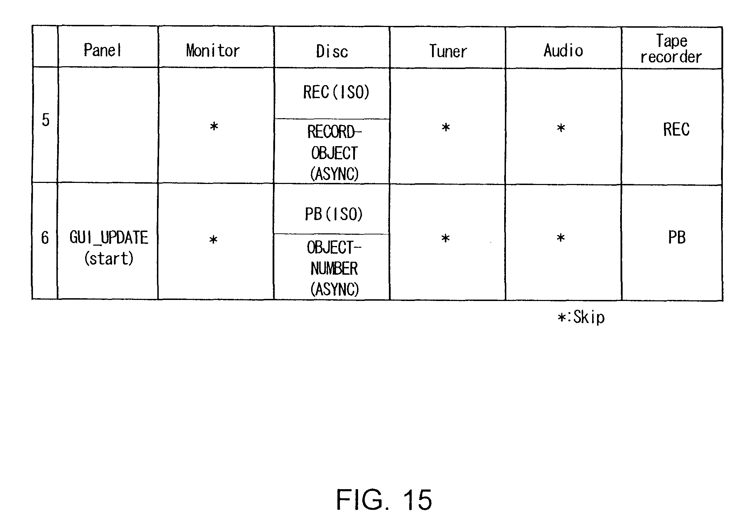

Fig. 15 shows an AV/C command for use in data pull setting, wherein an REC command in the row "5" is used for the data pull setting at step SP5.

At step SP6, the audio recording/reproducing apparatus (sink device) 4 sends an AV/C command (response) to the personal computer (controller) 1 through the IEEE 1394 bus 5 for notifying that it is ready for reception, followed by a transition to step SP7.

At step SP7, the personal computer (controller) 1 remains in a waiting state for accepting an incoming AV/C command supplied from the audio recording/reproducing apparatus (sink device) 4. If a negative result is returned at step SP7, this means that the audio recording/reproducing apparatus (sink device) 4 has not yet got ready for reception, in which case the personal computer (controller) 1 proceeds to step SP1 to wait for an AV/C command to be supplied from the audio recording/reproducing apparatus (sink device) 4.

Conversely, if a positive result is returned at step SP7, this means that the audio recording/reproducing apparatus (sink device) 4 is ready for reception, in which case the personal computer (controller) 1 proceeds to subsequent step SP8.

At step SP8, the personal computer (controller) 1 sends an AV/C command (response) for notifying that the audio recording/reproducing apparatus (sink device) 4 is ready for reception to the audio reproducing apparatus (source device) 3 through the IEEE 1394 bus 5, followed by a transition to step SP9.

At step SP9, the audio reproducing apparatus (source device) 3 remains in a waiting state to wait for accepting an incoming AV/C command supplied from the personal computer (controller) 1. If a negative result is returned at step SP9, this means that the audio recording/reproducing apparatus (sink device) 4 has not got ready for reception, in which case the audio reproducing apparatus (source device) 3 proceeds to step SP4 to wait for an AV/C command to be supplied from the personal computer (controller) 1.

Conversely, if an affirmative result is returned at step SP9, this means that the audio recording/reproducing apparatus (sink device) 4 is ready for reception, in which case the audio reproducing apparatus (source device) 3 proceeds to subsequent step SP10.

At step SP10, the audio reproducing apparatus (source device) 3 sends an audio signal retrieved from the optical disk 20 loaded therein in this instance to the audio recording/reproducing apparatus (sink device) 4 as stream data through the IEEE 1394 bus 5 (data push (Push the Stream)), followed by a transition to step SP11.

In Fig. 15, the row "6" indicates an AV/C command for use in data push setting, wherein an OBJECT-NUMBER command is used for the data push setting at step SP10.

At step SP11, the audio recording/reproducing apparatus (sink device) 4 detects stream data supplied thereto from the channel which has been set for connection at step SP4. If a negative result is returned at step SP11, this means that the stream data has not been supplied to the audio recording/reproducing apparatus (sink device) 4, in which case the audio recording/reproducing apparatus (sink device) 4 proceeds to step SP6 to detect stream data supplied thereto.

Conversely, if an affirmative result is returned at step SP11, this means that the stream data has been supplied to the audio recording/reproducing apparatus (sink device) 4, in which case the audio recording/reproducing apparatus (sink device) 4 proceeds to subsequent step SP12.

At step SP12, the audio recording/reproducing apparatus (sink device) 4 acquires the stream data supplied thereto from the IEEE 1394 bus 5.

Consequently, the audio recording/reproducing apparatus (sink device) 4 records the stream data supplied from the audio reproducing apparatus (source device) 3 on the magneto-optical disk 30 (see Fig. 7) as an audio signal.

In this way, the audio reproducing apparatus (source device) 3 can keep track of an operating situation of the audio recording/reproducing apparatus (sink device) 4 (whether it is ready for reception or not) with the aid of the personal computer (controller) 1, and can therefore output stream data to the audio recording/reproducing apparatus (sink device) 4 only when the audio recording/reproducing apparatus (sink device) 4 is ready for reception. Thus, the audio recording/reproducing apparatus (sink device) 4 is supplied with stream data through the IEEE 1394 bus 5 after the audio recording/reproducing apparatus (sink device) 4 is ensured to be ready for reception, thereby making it possible to record the stream data from the beginning on the magneto-optical disk 30 (see Fig. 7) without dropping.

In the configuration described above, the personal computer (controller) 1 outputs a transmission start request to the audio reproducing apparatus (source device) 3, as well as outputs a reception start request to the audio recording/reproducing apparatus (sink device) 4. In response, the audio reproducing apparatus (source device) 3 and the audio recording/reproducing apparatus (sink device) 4 perform the connection setting common to both sides.

After setting the connection, the audio recording/reproducing apparatus (sink) 4 prepares for receiving stream data, and, when it is ready for reception, notifies the audio reproducing apparatus (source device) 3 to that effect through the personal computer (controller) 1. In response, the audio reproducing apparatus (source device) 3 outputs stream data.

In the manner described above, the audio reproducing apparatus (source device) 3 can keep track of an operating situation of the audio recording/reproducing apparatus (sink device) 4 (whether it is ready for reception or not) by the personal computer (controller) 1, and refrains from outputting stream data until the audio recording/reproducing apparatus (sink device) 4 gets ready for reception. In this way, the audio reproducing apparatus (source device) 3 can output stream data to the audio reproducing apparatus (source device) 3 only when the audio recording/reproducing apparatus (sink device) 4 is ready for reception.

According to the configuration described above, the personal computer (controller) 1 keeps track of operating situations of the audio reproducing apparatus (source device) 3 and the audio recording/reproducing apparatus (sink device) 4 (whether the latter is ready for reception), and allows the audio reproducing apparatus (source device) 3 to output stream data onto the IEEE 1394 bus 5 only when the audio recording/reproducing apparatus (sink device) 4 is ready for reception, thereby permitting the audio recording/reproducing apparatus (sink device) 4 to record the stream data supplied from the IEEE 1394 bus 5 on the magneto-optical disk 30 (see Fig. 7) from the beginning without dropping. Consequently, the audio reproducing apparatus (source device) 3 and the audio recording/reproducing apparatus (sink device) 4 can prevent the truncation at the beginning upon receipt of the stream data.

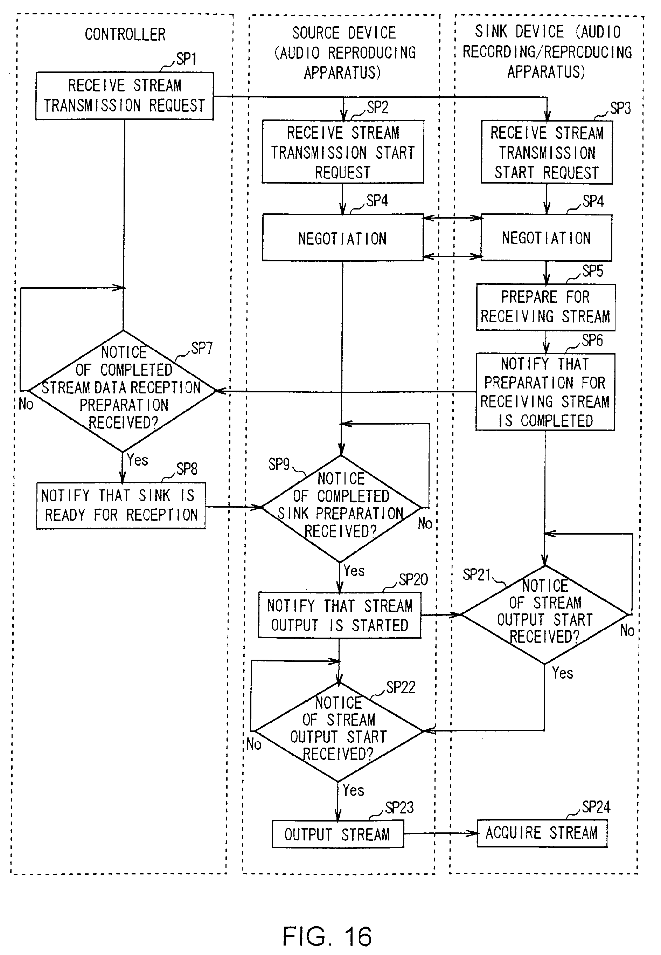

In the foregoing embodiment, the AV/C command (response) notifying that the audio recording/reproducing apparatus (sink device) 4 is ready for reception is sent to the audio reproducing apparatus (source device) 3 at step SP8 in the stream data transmission processing procedure, causing the audio reproducing apparatus (source device) 3 to output stream data to the audio recording/reproducing apparatus (sink device) 4 in response. The present invention, however, is not limited to this configuration. Alternatively, in Fig. 16, where parts corresponding to those in Fig. 14 are designated the same reference numerals, the AV/C command (response) notifying that the audio recording/reproducing apparatus (sink device) 4 is ready for reception is sent to the audio reproducing apparatus (source device) 3 at step SP8 in the stream data transmission processing procedure, and the audio reproducing apparatus (source device) 3, which has received the AV/C command, can output to the audio recording/reproducing apparatus (sink device) 4 a start notice notifying that it will output stream data to the audio recording/reproducing apparatus (sink device) 4. In this configuration, the audio recording/reproducing apparatus (sink device) 4 can minimize a blank at the beginning of the stream data supplied from the audio reproducing apparatus (source device) 3, when it records the stream data on the magneto-optical disk 30 loaded therein.

Specifically, if an affirmative result is returned at step SP9 in Fig. 16, this means that the audio recording/reproducing apparatus (sink device) 4 is ready for reception, in which case the audio reproducing apparatus (source device) 3 proceeds to subsequent step SP20.

At step SP20, the audio reproducing apparatus (source device) 3 outputs an output start notice to the audio recording/reproducing apparatus (sink device) 4 for notifying that the audio reproducing apparatus (source device) 3 outputs stream data, followed by a transition to step SP21.

At step SP21, the audio recording/reproducing apparatus (sink device) 4 remains in a waiting state for accepting an incoming AV/C command supplied from the audio reproducing apparatus (source device) 3. If a negative result is returned at step SP21, this means that the audio recording/reproducing apparatus (sink device) 4 has not started outputting stream data, in which case the audio recording/reproducing apparatus (sink device) 4 proceeds to step SP6 to wait for an AV/C command supplied from the audio reproducing apparatus (source device) 3.

Conversely, if an affirmative result is returned at step SP21, this means that the audio reproducing apparatus (source device) 3 has already started outputting stream data, in which case the audio reproducing apparatus (source device) 3 proceeds to subsequent step SP22.

At step SP22, the audio reproducing apparatus (source device) 3 remains in a waiting state for accepting an incoming AV/C command supplied from the audio recording/reproducing apparatus (sink device) 4. If a negative result is returned at step SP22, this means that the audio recording/reproducing apparatus (sink device) 4 has not received the output start notice, in which case the audio reproducing apparatus (source device) 3 proceeds to step SP20 to wait for an AV/C command supplied from the audio recording/reproducing apparatus (sink device) 4.

Conversely, if an affirmative result is returned at step SP22, this means that the audio recording/reproducing apparatus (sink device) 4 has already received the output start notice, in which case the audio reproducing apparatus (source device) 3 proceeds to step SP23.

At step SP23, the audio reproducing apparatus (source device) 3 outputs stream data to the audio recording/reproducing apparatus (sink device) 4 through the IEEE 1394 bus 5, followed by a transition to step SP24.

At step SP24, the audio recording/reproducing apparatus (sink device) 4 acquires the stream data supplied from the audio reproducing apparatus (source device) 3 through the IEEE 1394 bus 5.

In this way, the audio reproducing apparatus (source device) 3 outputs the output start notice to the audio recording/reproducing apparatus (sink device) 4 for notifying that the audio reproducing apparatus (source device) 3 outputs stream data to the audio recording/reproducing apparatus (sink device) 4, so that the audio recording/reproducing apparatus (sink device) 4 can identify when the audio reproducing apparatus (source device) 3 outputs the stream data. This enables the audio recording/reproducing apparatus (sink device) 4 to start recording the stream data at the time the audio reproducing apparatus (source device) 3 just outputs the stream data. Consequently, the audio recording/reproducing apparatus (sink device) 4 can minimize a blank at the beginning of the stream data supplied from the audio reproducing apparatus (source device) 3, when it records the stream data on the magneto-optical disk 30 loaded therein.

In the foregoing embodiment, at step SP11 in the stream data transmission processing procedure, the audio recording/reproducing apparatus (sink device) 4 detects stream data supplied thereto from the channel which has been set for a connection at step SP4. The present invention, however, is not limited to this configuration. Alternatively, after the audio recording/reproducing apparatus (sink device) 4 sends the AV/C command for notifying that it is ready for reception, the audio recording/reproducing apparatus (sink device) 4 can automatically acquire the stream data without detecting the stream data supplied thereto from the channel which has been set for connection at step SP4.

Also, in the foregoing embodiment, the personal computer (controller) 1, which acts as a communication controller, keeps track of operating situations of the audio reproducing apparatus (source device) 3 and the audio recording/reproducing apparatus (sink device) 4 for controlling them. The present invention, however, is not limited to this manner of control. Alternatively, either the audio reproducing apparatus (source device) 3 or the audio recording/reproducing apparatus (sink device) 4 can keep track of their operating situations for controlling. Further alternatively, another device connected to the IEEE 1394 bus 5 can be responsible for such operations. In this configuration, similar effects to the foregoing embodiment can be provided.

Further, while the foregoing embodiment has been described for the configuration in which the audio reproducing apparatus (source device) 3, which acts as an output device, and the audio recording/reproducing apparatus (sink device) 4, which acts as an input device, are connected to the IEEE 1394 bus 5, the present invention is not limited to this configuration, but a variety of other input device or output device can be connected to the IEEE 1394 bus 5.

Further, while the foregoing embodiment has been described for the configuration which comprises the personal computer (controller) 1, the audio reproducing apparatus 3 and the audio recording/reproducing apparatus 4 as nodes connected to the IEEE 1394 bus 5, the present invention is not limited to this configuration, but a variety of other devices can be connected to the IEEE 1394 bus 5 as nodes.

Further, in the foregoing embodiment, AV/C commands are used to control the audio reproducing apparatus (source device) 3 and the audio recording/reproducing apparatus (sink device) 4. The present invention, however, is not limited to this manner of control. Alternatively, other commands can be defined such that the personal computer (controller) 1, the audio reproducing apparatus (source device) 3 and the audio recording/reproducing apparatus (sink device) 4 operate in accordance with the definitions.

Further, in the foregoing embodiment, audio data generated from an audio signal is sent onto the IEEE 1394 bus 5 as stream data. The present invention, however, is not limited to this configuration. Alternatively, a variety of other data can be sent onto the IEEE 1394 bus 5 as stream data, for example, by connecting a Digital Versatile Disk (DVD) player or the like to the IEEE 1394 bus 5 to send video data retrieved from a DVD loaded in the DVD player onto the IEEE 1394 bus 5 as stream data.

Further, while the foregoing embodiment has been described for a network system which is based on a serial bus in conformity to the IEEE 1394 standard to which the present invention is applied, the present invention is not limited to this particular network system, but can be applied to network systems configured in conformity to a variety of other standards. Possible devices connected to such networks configured in conformity to a variety of other standards may include a communication controller which may comprise a communication start request means, a notifying means and a transmission control means.

Further, in the foregoing embodiment, stream data generated from the audio reproducing apparatus (source device) 3 is recorded on a recording medium loaded in the audio recording/reproducing apparatus (sink device) 4. The present invention, however, is not limited to such recording. Alternatively, stream data generated from the audio reproducing apparatus (source device) 3 may be outputted, for example, to a sink device comprised of a speaker built-in amplifier or the like to output audio from the speaker built-in amplifier.

As described above, according to an embodiment of the present invention, in a communication system 100 which comprises an output device 3 for outputting stream data through a data bus 5, which includes predetermined connecting means, an input device 4 for acquiring the stream data from the output device 4 through the data bus 5, and a communication controller 1 for controlling the output device 3 and the input device 4, all of which are interconnected through the data bus 5, the communication controller 1 requests the output device 3 and the input device 4 to start communicating stream data, forces the input device 4, which has been requested to start the communication, to notify the output device 3 that the input device 4 has completed a preparation for receiving the stream data, and forces the output device 3 to transmit the stream data to the input device 4 through the data bus 5 when the completion of preparation for the reception is notified to the output device 3, thereby making it possible to prevent the truncation at the beginning upon receiving the stream data at the input device.

While there has been described in connection with the illustrative embodiments of the invention, it will be obvious to those skilled in the art that various changes and modifications may be aimed, therefore, to cover in the appended claims all such changes and modifications as fall within the true spirit and scope of the invention.

## Claims

1. In a communication system having an output device for outputting stream data through a data bus including a predetermined connecting means, an input device for acquiring the stream data from said output device through said data bus, and a communication controller for controlling said output device and said input device, wherein said output device, said input device and said communication controller are interconnected through said data bus, a method of controlling a communication of said stream data, performed by said communication controller, said method comprising the steps of:
requesting said output device and said input device to start communicating said stream data;
forcing said input device, which is requested to start communicating by said step of requesting the start of the communication, to notify said output device that said input device has completed a preparation for receiving said stream data; and
forcing said output device to transmit said stream data to said input device through said data bus when said output device is notified of the completion of the preparation for reception.

2. The communication control method according to claim 1 wherein said step of requesting the start of the communication includes setting a connection such that said output device and said input device can communicate the stream data.

3. A communication control apparatus for use in a communication system which has an output device for outputting stream data through a data bus including predetermined connecting means and an input device for acquiring said stream data from said output device through said data bus, wherein said communication control apparatus is coupled to said input device and said output device to control said output device and said input device for communicating said stream data between said input device and said output device, said communication control apparatus comprising:
communication starting means for requesting said output device and said input device to start communicating said stream data;
notifying means for forcing said input device, which is requested to start communicating by said communication starting means, to notify said output device that said input device has completed a preparation for receiving said stream data; and
transmission control means for forcing said output device to transmit said stream data to said input device through said data bus when said output device is notified of the completion of the preparation for reception from said notifying means.

4. The communication control apparatus according to claim 3 wherein said start requesting means sets a connection such that said output device and said input device can communicate the stream data.
